# EUROPÄISCHE PATENTSCHRIFT

(11) **EP 2 789 451 B1**
(45) Veröffentlichungstag und Bekanntmachung des Hinweises auf die Patenterteilung: **12.07.2017**
(21) Anmeldenummer: 14000543.0
(22) Anmeldetag: 15.02.2014
(51) Int. Cl.: B29C 65/34, B29C 65/44, B29C 65/78, B29C 73/34, H05B 3/00, B29C 65/56, B29C 73/04

(54) **VORRICHTUNG ZUM EINBRINGEN EINER ELEKTRISCH LEITENDEN DRAHTKLAMMER IN EIN WERKSTÜCK AUS THERMOPLASTISCHEM KUNSTSTOFFMATERIAL**
DEVICE FOR INTRODUCING AN ELECTRICALLY CONDUCTIVE STAPLE IN A WORKPIECE OF SYNTHETIC THERMOPLASTIC MATERIAL
DISPOSITIF PERMETTANT D'INTRODUIRE UNE AGRAPHE CONDUCTRICE DE L'ÉLECTRICITÉ DANS UNE PIÈCE EN MATIÈRE SYNTHÉTIQUE THERMOPLASTIQUE

(30) Priorität: 12.04.2013 DE 202013003425 U
(43) Veröffentlichungstag der Anmeldung: 15.10.2014
(73) Patentinhaber: Schnitzhofer, Franz, 69412 Eberbach (DE)
(72) Erfinder: Schnitzhofer, Franz, 69412 Eberbach (DE)
(74) Vertreter: Kesselhut, Wolf

(56) Entgegenhaltungen:
- EP-A2- 0 146 744
- WO-A2-2012/066522
- JP-A- 2011 152 741
- US-A- 3 431 593
- US-A- 3 820 221
- US-A- 4 104 339

## Beschreibung

Die Erfindung betrifft eine Vorrichtung zum Verbinden von thermoplastischen Kunststoffteilen gemäß dem Oberbegriff von Anspruch 1.

Bauteile aus thermoplastischem Kunststoff finden auf nahezu allen Gebieten der Technik, insbesondere im Automobilbau, Einsatz, da sie sowohl technisch als auch ästhetisch nutzbare Eigenschaften besitzen. Gegenüber metallischen Werkstoffen sind die meisten der überwiegend eingesetzten thermoplastischen Kunststoffe schlagempfindlich und neigen zur Bildung von Rissen und Brüchen. Dies gilt in gleichem Maße für Bauteile oder Baukomponenten, die an Kunststoffen befestigt oder in diese eingebettet sind.

Eine Beschädigung eines Teils einer Baukomponente aus Kunststoff, beispielsweise der Rastnase an einer Stoßstange eines Automobils, hat oftmals einen Austausch des gesamten Bauteiles zur Folge, da sich die Kunststoffe häufig nur schlecht kleben lassen und das Material an den Bruchstellen zusätzlich geschwächt wird.

Aus dem Stand der Technik ist es in diesem Zusammenhang bekannt, thermoplastische Kunststoffteile dadurch zu reparieren, das Klammern aus Metalldraht im Bereich der Bruchstellen in das Kunststoffmaterial eingeschmolzen werden. Dokumente US 3 820 221 A, JP 2011 152741 A und WO 2012/066522 A2 sind Beispiele dieser Praxis. Die Reparatur der Teile erfolgt in der Regel manuell und erfordert ein hohes handwerkliches Geschick, weshalb diese Arbeiten nur von wenigen ausgewählten Personen durchgeführt werden können. Werden die Klammern zu tief eingeschmolzen, beispielsweise in die Rückseite des Grundkörpers einer Kunststoffstoßstange, so besteht die Gefahr, dass sich die Kontur der Drahtklammer auf der lackierten Sichtseite der Stoßstange abzeichnet, was das optische Erscheinungsbild in unerwünschter Weise stört. Eine zu geringe Eindringtiefe geht wiederum auf Kosten der Stabilität der verbundenen Teile.

Demgemäß ist es eine Aufgabe der vorliegenden Erfindung, eine Vorrichtung zu schaffen, welche es ermöglicht, Klammern aus Metalldraht mit einer hohen Präzision in einer gewünschten Tiefe in ein thermoplastisches Kunststoffmaterial einzubringen.

Diese Aufgabe wird erfindungsgemäß durch eine Vorrichtung mit den Merkmalen von Anspruch 1 gelöst. Weitere Merkmale der Erfindung sind in den abhängigen Ansprüchen beschrieben.

Gemäß der Erfindung umfasst eine Vorrichtung zum Einschmelzen einer elektrisch leitenden Drahtklammer in ein Werkstück aus thermoplastischem Kunststoffmaterial ein Gehäuse, an welchem eine erste und zweite Elektrode angeordnet sind, an denen das jeweilige Ende der Drahtklammer zur Erzeugung eines die Drahtklammer erhitzenden Stromflusses durch die Klammer hindurch aufgenommen werden kann, um die Klammer durch Vorschieben des Gehäuses unter gleichzeitiger Verflüssigung des thermoplastischen Kunststoffmaterials in das Werkstück einzutreiben.

Die erfindungsgemäße Vorrichtung zeichnet sich dadurch aus, dass das Gehäuse im Bereich der Elektroden einen in Vorschubrichtung insbesondere verstellbaren Tiefenanschlag aufweist, der den Bewegungsweg des Gehäuses beim Eintreiben der Drahtklammer begrenzt, wenn die zuvor eingestellte Eindringtiefe der Klammer erreicht wurde.

Soweit in der vorliegenden Anmeldung von Drahtklammern gesprochen wird, so sollen hiervon alle Arten von bekannten elektrisch leitenden Klammern oder Spangen des Standes der Technik mit umfasst sein, die durch Anlegen einer Spannung von insbesondere 2,4 V elektrisch erwärmt werden können, um diese insbesondere zur Überbrückung eines Risses oder Bruchs in einem Werkstück aus thermoplastischem Kunststoffmaterial quer zur Bruchlinie in dieses eintreiben zu können.

Durch die Erfindung wird es möglich, die Einschmelztiefe der Klammern voreinzustellen, sodass es nicht zu Beschädigungen der Kunststoffbauteile durch ein zu tiefes Eindringen der Klammern in den Kunststoff oder einen schlechtem Zusammenhalt der Bauteile wegen einer zu geringen Einschmelzung der Klammern kommen kann. Außerdem kann jede Montagestelle gleichwertig bearbeitet werden, da der Tiefenanschlag das Arbeitsergebnis unmittelbar beeinflusst. Somit ist es nicht mehr erforderlich, auf speziell ausgebildetes Fachpersonal zurückzugreifen, da die Montagequalität von handwerklichem Feingefühl unabhängig ist.

Es ist gemäß der Erfindung sowohl eine Montage des Tiefenanschlags am Gehäuse der Vorrichtung, als auch an den Elektroden möglich, um den Tiefenanschlag relativ gegenüber den Drahtklammern zu bewegen. Durch die Montage auf den Elektroden ergibt sich der Vorteil, dass diese auch eine abgewinkelte Formgebung besitzen können, die es erlaubt, die erfindungsgemäße Vorrichtung auch an unzugänglichen Stellen und beengten Platzverhältnissen einzusetzen.

Der Tiefenanschlag ist bei der bevorzugten Ausführungsform der Erfindung demgemäß an den Elektroden aufgenommen und besteht vorzugsweise aus einem elektrisch nicht leitenden Material, insbesondere aus Kunststoff, obgleich es ebenfalls denkbar ist, den Anschlag z.B. aus Metall zu fertigen und lediglich die Bereiche des Anschlags, die mit den Elektroden in Kontakt gelangen, sowie vorzugsweise auch die Außenseite elektrisch durch eine Beschichtung zu isolieren, um einen Kurzschluss zu vermeiden.

Bei der bevorzugten Ausführungsform der Erfindung sind die Elektroden zylinder- oder stangenförmig ausgebildet, und der Tiefenanschlag weist zwei Klemmbacken auf, die die Elektroden umgreifen und die zusammen einen Schlitten bilden, der relativ zu den Elektroden verschiebbar ist.

Nach einem weiteren der Erfindung zu Grunde liegenden Gedanken sind die Klemmbacken durch Schraubmittel aufeinander zu bewegbar, derart, dass die Klemmbacken bei gelösten Schraubmitteln frei auf den Elektroden in eine gewünschte Position verschoben und nach dem Erreichen der gewünschten Position durch Anziehen der Schraubmittel in dieser Position mit den Elektroden verklemmt werden können. Die Schraubmittel können z.B. eine Gewindeschraube mit einem erweiterten Kopf umfassen, die sich durch eine Durchgangsbohrung in der einen Klemmbacke hindurch erstreckt und die mit ihrem freien Gewindeabschnitt in einer entsprechenden Gewindebohrung in der anderen Klemmbacke aufgenommen ist.

Um eine spielfreie seitlich Führung des Schlittens zu ermöglichen, weist jede der Klemmbacken in vorteilhafter Weise zwei wannenförmige Aufnahmen auf, von denen eine jede wannenförmige Aufnahme in Höhe einer jeden Elektrode angeordnet ist und die jeweilige Elektrode nach Art einer Halbschale umgreift. Hierdurch ergibt sich der Vorteil, dass der Schlitten beim Verschieben desselben seitlich entlang der Elektroden geführt wird, was eine exakte Positionierung der Klammern ermöglicht.

Nach einem weiteren der Erfindung zu Grunde liegenden Gedanken umfasst der Tiefenanschlag wenigstens ein Begrenzungsmittel, dass sich bevorzugt parallel zu den Elektroden erstreckt und zusammen mit dem Tiefenanschlag relativ zu den Elektroden verschoben werden kann. Hierdurch ergibt sich der Vorteil, dass durch eine entsprechende Veränderung der Länge des Begrenzungsmittels der Abstand zwischen dem Gehäuse und dem zu bearbeitenden Bauteil verändert werden kann.

Obgleich der Einsatz von lediglich einem Stift möglich ist, umfasst das Begrenzungsmittel bei der bevorzugten Ausführungsform der Erfindung wenigstens zwei Stifte, die parallel und im Abstand zueinander an einer der beiden Klemmbacken in der Weise aufgenommen sind, dass die Anschlagflächen an den freien Enden der Stifte in einer gedachten Ebene liegen, die im Wesentlichen parallel zu einem Quersteg der Drahtklammer verläuft, die in den Elektroden aufgenommen ist. Die Aufnahme der Drahtklammer erfolgt dabei bevorzugt dadurch, dass ein jeder der beiden freien Schenkel einer Drahtklammer in eine entsprechende Aufnahmebohrung in der zugehörigen Elektrode eingesteckt wird. Hierdurch ist eine sehr schnelle Bestückung der erfindungsgemäßen Vorrichtung in Verbindung mit einer hohen Tiefen-Genauigkeit beim Eintreiben der Klammern gegeben. Zudem wird die Gefahr verringert, dass die erfindungsgemäße Vorrichtung beim Eintreiben der Klammern geneigt gehalten wird und dadurch die jeweiligen Klammern verkantet in das Werkstück eingetrieben werden. Weiterhin besteht die Möglichkeit, insgesamt drei Stifte in einer dreiecksförmigen Anordnung um die beiden Elektroden herum anzuordnen, um zusätzlich auch in der Richtung senkrecht zum Quersteg der Drahtklammer eine definierte Ausrichtung des Querstegs in der gedachten Ebene zu erhalten.

Alternativ besteht die Möglichkeit, dass das Begrenzungsmittel als ein zungenförmiger, insbesondere quaderförmiger Vorsprung ausgebildet ist, der durch eine der beiden Klemmbacken getragen wird. Hierbei erstreckt sich die Stirnseite am freien Ende des quaderförmigen Vorsprungs bevorzugt parallel zum Quersteg der Drahtklammern, um eine parallele Ausrichtung der Drahtklammern relativ zur Oberfläche des Kunststoffbauteils zu gewährleisten.

Schließlich ist es bei der bevorzugten Ausführungsform der Erfindung vorgesehen, dass am Gehäuse oder an einer der Elektroden eine Skala, insbesondere eine Millimeterskala angeordnet ist, über welche/s der Weg, um welchen der Tiefenanschlag, bzw. der Schlitten relativ zu den Elektroden bewegt wird, abgelesen werden kann. Durch die Skala ergibt sich der Vorteil, dass sich der vorgewählte Verschiebeweg, und damit die Setztiefe der Drahtklammern, in der Praxis sehr leicht einstellen und überprüfen lässt.

Weitere Vorteile und vorteilhafte Ausgestaltungen der Erfindung sind der nachfolgenden Beschreibung, der Zeichnung und den Ansprüchen entnehmbar.

Die Erfindung wird nachfolgend mit Bezug auf die Zeichnungen anhand von bevorzugten Ausführungsformen beschrieben. In den Zeichnungen zeigen:
- Fig. 1: die erfindungsgemäße Vorrichtung in einer perspektivischen Darstellung,
- Fig. 2: eine Frontansicht der erfindungsgemäßen Vorrichtung,
- Fig. 3: eine Seitenansicht der erfindungsgemäßen Vorrichtung,
- Fig. 4: eine Draufsicht der erfindungsgemäßen Vorrichtung,
- Fig. 5: eine alternative Ausgestaltung des Tiefenanschlags mit einem Begrenzungsmittel, das als quaderförmiger Vorsprung ausgestaltet ist, und
- Fig. 6: eine weiter Ausführungsform der Vorrichtung mit abgewinkelten Elektroden.

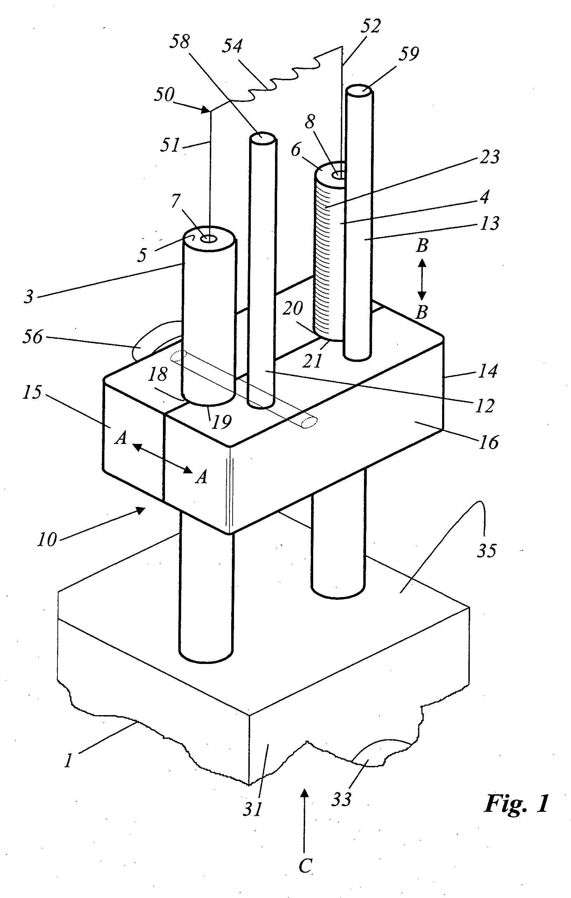

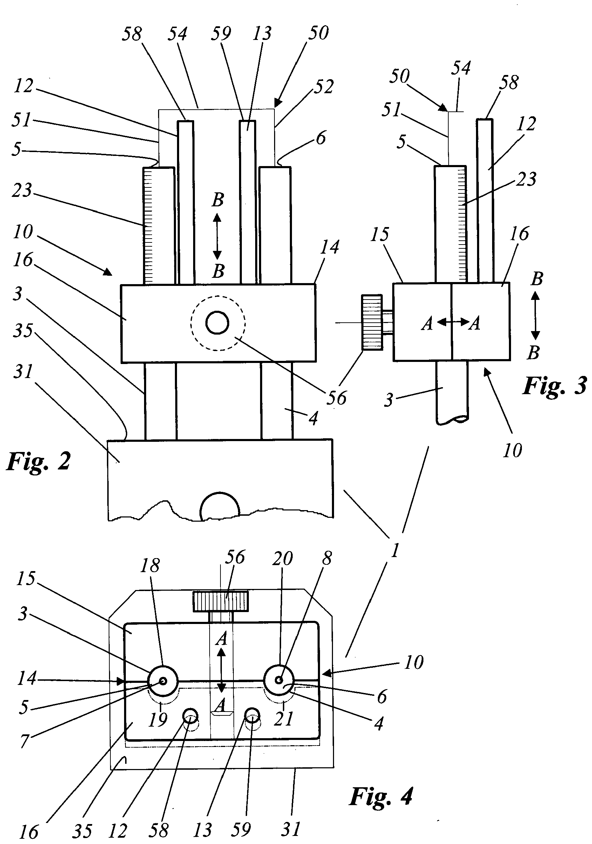

Die Figuren 1 bis 4 geben ein erstes Ausführungsbeispiel der Erfindung wieder. Die erfindungsgemäße Vorrichtung 1 umfasst ein lediglich teilweise dargestelltes Gehäuse 31, welches bevorzugt als Griffteil ausgestaltet ist. Im Gehäuse 31 ist eine nicht näher gezeigte Stromquelle, vorzugsweise ein oder mehrere Akkus, untergebracht.

An der Front- oder Stirnfläche 35 des Gehäuses 31 sind zwei vorzugsweise zylindrische Elektroden 3, 4 angeordnet, die sich parallel und im Abstand voneinander von der Stirnfläche 35 des Gehäuses 31 weg erstrecken. In die Stirnflächen 5, 6 der Elektroden 3, 4 ist jeweils ein Kanal 7, 8 eingebracht, in den der jeweilige Schenkel 51, 52 einer bekannten leitenden Drahtklammer 50 eingesetzt wird. Der Quersteg 54 der Klammer 50 kann - wie bei der Ausführungsform von Fig. 1 angedeutet - wellenförmig ausgestaltet sein oder je nach Anwendungsfall eine unterschiedliche Formgebung bzw. Geometrie besitzen.

An den Elektroden 3, 4 ist ein Tiefenanschlag 10 angeordnet, der einen Schlitten 14 umfasst, welcher zwei in Richtung des Pfeils A auf einander zu oder voneinander wegbewegbare Klemmbacken 15, 16 besitzt, die durch Schraubmittel in Form einer Rändelschraube 56 miteinander verspannbar sind. An einer der Klemmbacken 15, 16 sind stabförmige Begrenzungsmittel in Form von zwei parallel zu einander beabstandeten Stiften 12, 13 angeordnet, die sich parallel zu den Elektroden 3, 4 in Richtung vom Gehäuse 31 weg erstrecken.

Die Klemmbacken 15, 16 besitzen auf ihren benachbarten Seitenflächen wannenförmige Aufnahmen 18, 19, 20, 21, welche die Elektroden 3, 4 im zusammengebauten Zustand des Schlittens 14 umgreifen. Durch Anziehen der Rändelschraube 56 werden die beiden Klemmbacken 15, 16 aufeinander zu bewegt, bis die Innenflächen der wannenförmigen Aufnahmen an der Außenseite der Elektroden 3, 4 anliegen und dadurch den Schlitten an den Elektroden verklemmt. Hierdurch ist die Position des Tiefenanschlags 10 auf den Elektroden 3, 4 variabel festlegbar. Auf einer der Elektroden 3, 4 ist weiterhin ein Maßstab 23 angeordnet, der eine Vielzahl von Positionsmarken umfasst, die bevorzugt als Ringnuten in Abständen von z.B. 1 mm in die Außenseite der Elektrode 4 eingebracht sind. Um beim Verschieben des Schlittens 14 eine Positionierung desselben im konkreten Millimeter-Abständen zu ermöglichen, kann es vorgesehen sein, dass eine in den Figuren nicht gezeigte federbelastete Rastklinke mit einer abgerundeten Spitze auf der Außenseite der Elektrode 4 entlang gleitet und zur Erzeugung eines spürbaren mechanischen Widerstandes in die Ringnuten eingreift, wobei vorzugsweise gleichzeitig auch ein akustisches Klick-Geräusch erzeugt wird, welches dem Bediener signalisiert, um wie viele Ringnuten-Abstände der Schlitten bewegt wurde.

Wenn für einen Anwendungsfall bekannt ist, dass die Klammer 50 z.B. um 2 mm in den zu bearbeitenden Kunststoff eingeschmolzen werden muss, so wird bevorzugt zuerst ein Nullabgleich vorgenommen, indem der Schlitten 14 bei gelöster Schraube 56 und eingesetzter Drahtklammer 50 gegen eine ebene Oberfläche bewegt wird, bis der Quersteg 54 der Klammer 50 und die Anschlagflächen 58, 59 der Begrenzungsmittel 12, 13 auf einer Höhe liegen. Anschließend wird der Schlitten 14 des Tiefenanschlages 10 so weit in Richtung des Pfeils B vom Gehäuse 31 weg verschoben, bis die Anschlagflächen 58, 59 der Begrenzungsmittel 12, 13 exakt 2mm unterhalb des Quersteges 54 der Klammer 50 positioniert sind, was mit Hilfe des Maßstabes 23 abgelesen werden kann.

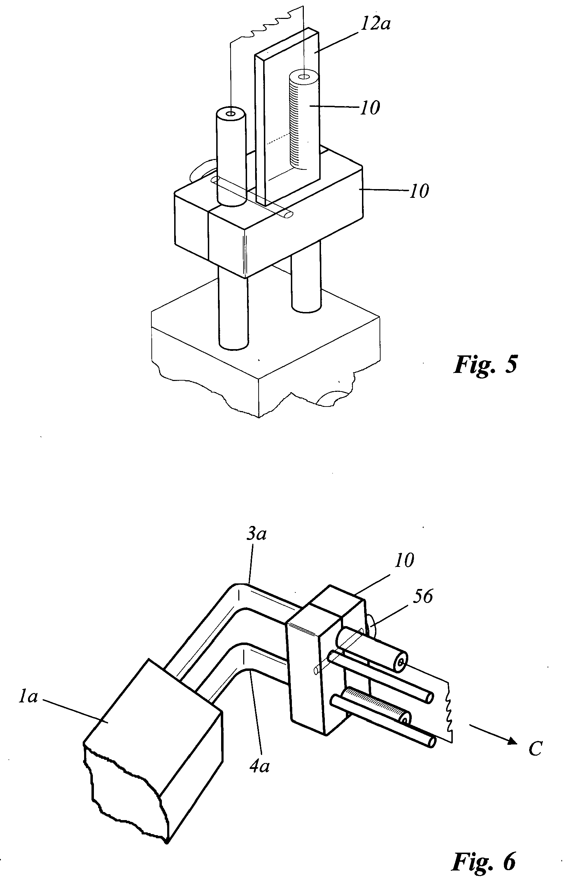

Fig. 5 zeigt eine alternative Ausgestaltung der Erfindung, bei der anstelle von zwei parallelen Stiften 12, 13 ein Begrenzungsmittel 12a zum Einsatz gelangt, dass die Form eines quaderförmigen Vorsprungs 54 besitzt.

Bei beiden Varianten erfüllen die Begrenzungsmittel auch die Aufgabe eines Auflagemittels, welches sicherstellt, dass die Klammern 50 vor und während des Eintreibens zumindest in einer Koordinatenrichtung parallel zur Werkstückoberfläche ausgerichtet sind.

Fig. 6 zeigt eine weitere Ausführungsform der erfindungsgemäßen Vorrichtung 1a, bei der die Elektroden 3a, 4a rechtwinklig abgebogen sind. Diese Ausführungsform, bei der auch ein anderer Winkel möglich ist, z.B. 45 Grad, erlaubt das Einbringen der Drahtklammern 50 auch an schlecht zugänglichen Stellen.

Für alle Ausführungsformen der Erfindung gilt, dass bei der Bearbeitung eines Bauteils die Vorrichtung 1, 1a vorbereitet wird, indem der Tiefenanschlag 10 auf die gewünschte Einschmelztiefe der Klammer 50 eingestellt wird. Die in die Elektroden 3, 4eingesetzte Klammer 50 wird mit ihrem Quersteg 54 auf das oder die zu bearbeitenden Bauteile aufgesetzt und das Werkzeug bevorzugt von Hand einem Vorschub in Richtung des Pfeils C ausgesetzt, um dieses in Richtung des in den Figuren nicht näher gezeigten Bauteils zu bewegen. Während dessen werden durch Betätigung eines elektrischen Schalters, der bevorzugt einen an der Außenseite des Gehäuses 31 angeordneten Druckknopf 33 aufweist, die Elektroden 3, 4 mit der internen Stromquelle in Form des Akkus, oder auch mit einer externen Stromquelle verbunden, wodurch es über die elektrisch leitende Drahtklammer 50 zu einem Stromfluss zwischen den Elektroden 3, 4 kommt, durch den sich die Drahtklammer über den Schmelzpunkt des thermoplastischen Kunststoffmaterials hinaus erwärmt.

### Liste der Bezugszeichen

- 1,1a: Erfindungsgemäße Vorrrichtung
- 3,3a: Elektrode
- 4,4a: Elektrode
- 5: Stirnfläche
- 6: Stirnfläche
- 7: Kanal in Elektrode zur Aufnahme eines Schenkels der Drahtklammer
- 8: Kanal in Elektrode zur Aufnahme eines Schenkels der Drahtklammer
- 10: Tiefenanschlag
- 12: Begrenzungsmittel
- 12a: quaderförmiger Vorsprung
- 13: Begrenzungsmittel
- 14: Schlitten
- 15: Klemmbacke
- 16: Klemmbacke
- 18: wannenförmige Aufnahme
- 19: wannenförmige Aufnahme
- 20: wannenförmige Aufnahme
- 21: wannenförmige Aufnahme
- 23: Maßstab /Raster
- 31: Gehäuse/ Griffteil
- 33: Druckknopf
- 35: Frontfläche
- 50: Klammer
- 51: Schenkel
- 52: Schenkel
- 54: Quersteg
- 56: Rändelschraube
- 58: Anschlagfläche
- 59: Anschlagfläche

## Patentansprüche

1. Vorrichtung (1) zum Einbringen einer elektrisch leitenden Drahtklammer (50) in ein Werkstück aus thermoplastischem Kunststoffmaterial, mit einem Gehäuse (31) und einer daran vorgesehenen ersten und zweiten Elektrode (3, 4), an der ein jeweiliger Schenkel (51, 52) der Drahtklammer (50) zur Erzeugung eines die Drahtklammer (50) erhitzenden Stromflusses aufnehmbar ist, um diese durch einen Vorschub des Gehäuses (31) unter Verflüssigung des thermoplastischen Kunststoffmaterials in das Werkstück einzutreiben,
**dadurch gekennzeichnet,**
**dass** das Gehäuse (31) im Bereich der Elektroden (3, 4) einen in Vorschubrichtung verstellbaren Tiefenanschlag (10) besitzt.

2. Vorrichtung nach einem der vorhergehenden Ansprüche,
**dadurch gekennzeichnet,**
**dass** der Tiefenanschlag (10) an den Elektroden (3, 4) aufgenommen ist und aus einem elektrisch nicht leitenden Material, insbesondere Kunststoff, besteht.

3. Vorrichtung nach Anspruch 2,
**dadurch gekennzeichnet,**
**dass** die Elektroden (3, 4) insbesondere zylinder- oder stangenförmig ausgebildet sind, und dass der Tiefenanschlag (10) zwei einen Schlitten (14) bildende und die Elektroden (3, 4) umgreifende Klemmbacken (15, 16) umfasst.

4. Vorrichtung nach Anspruch 3,
**dadurch gekennzeichnet,**
**dass** die Klemmbacken (15, 16) durch Schraubmittel (56) aufeinander zu bewegbar sind, derart, dass die Klemmbacken (15, 16) bei gelösten Schaubmitteln entlang der Elektroden (3, 4) in eine gewünschte Position verschiebbar und durch Anziehen der Schraubmittel (56) in dieser Position mit den Elektroden (3, 4) verklemmbar sind.

5. Vorrichtung nach einem der Ansprüche 3 oder 4,
**dadurch gekennzeichnet,**
**dass** jede der Klemmbacken (15, 16) zwei wannenförmige Aufnahmen (18, 19, 20, 21) aufweist, welche die jeweilige Elektrode (3, 4) zum Führen der Klemmbacken (15, 16) beim Verschieben des Schlittens (14) halbschalenartig umgreifen.

6. Vorrichtung nach einem der vorhergehenden Ansprüche,
**dadurch gekennzeichnet,**
**dass** der Tiefenanschlag (10) mindestens ein sich parallel zu den Elektroden (3, 4) erstreckendes Begrenzungsmittel (12, 13) umfasst, welches zusammen mit dem Tiefenanschlag relativ zu den Elektroden (3,4) bewegbar ist.

7. Vorrichtung nach Anspruch 6 und einem der Ansprüche 3 bis 5,
**dadurch gekennzeichnet,**
**dass** das Begrenzungsmittel wenigstens zwei Stifte (12, 13) aufweist, die parallel und im Abstand zueinander an wenigstens einer der beiden Klemmbacken (15, 16) in der Weise aufgenommen sind, dass die Anschlagflächen (58, 59) an den freien Enden der Stifte (12, 13) in einer gedachten Ebene liegen, die im Wesentlichen parallel zu einem Quersteg (54) einer an den Elektroden (3,4) aufgenommenen Drahtklammer (50) verläuft.

8. Vorrichtung nach Anspruch 6 und einem der Ansprüche 3 bis 5,
**dadurch gekennzeichnet,**
**dass** das Begrenzungsmittel (12, 13) einen insbesondere quaderförmigen Vorsprung (54) umfasst, welcher an einer der beiden Klemmbacken (15, 16) aufgenommen ist.

9. Vorrichtung nach einem der vorhergehenden Ansprüche,
**dadurch gekennzeichnet,**
**dass** am Gehäuse (31) oder an einer der Elektroden (3, 4) ein Maßstab (23) angeordnet ist, über welchen der Weg, um den der Anschlag (10) relativ zu den Elektroden (3, 4) bewegt wird, ablesbar ist.

10. Vorrichtung nach einem der vorhergehenden Ansprüche,
**dadurch gekennzeichnet,**
**dass** Maßstab (23) Positionsmarken umfasst, die bevorzugt als Ringnuten in gleichmäßigen Abständen von insbesondere 1 mm in die Außenseite einer Elektrode (4) eingebracht sind, und dass eine federbelastete Rastklinke vorgesehen ist, welche auf der Außenseite der Elektrode (4) entlanggleitet und unter Erzeugung eines spürbaren mechanischen Widerstandes und/oder eines akustischen Geräuschs in die Ringnuten eingreift.

## Claims

1. Device (1) for inserting an electrically conductive wire clip (50) into a workpiece made of thermoplastic plastic material, with a housing (31) and a first and second electrode (3, 4) provided thereat, which receives a respective leg (51, 52) of the wire clip (50) for generating a current flow heating the wire clip (50) to drive the same into the workpiece by advancing the housing (31) whilst liquefying the thermoplastic plastic material,
**characterised in that**
the housing (31) has a depth stop (10) which is adjustable in an advancing direction and which is located in the area of the electrodes (3, 4).

2. Device according to one of the preceding claims,
**characterised in that**
the depth stop (10) is received at the electrodes (3, 4) and consists or an electrically non-conductive material, in particular plastic.

3. Device according to claim 2,
characterised is that
the electrodes (3, 4) are in particular cylinder- or rod-shaped, and that the depth stop (10) comprises two clamping jaws (15, 16) which form a slide (14) and encompass the electrodes (3, 4).

4. Device according to claim 3,
**characterised in that**
the clamping jaws (15, 16) are movable towards each other by screwing means (56) in such a way that the clamping jaws (15, 16) can be displaced along the electrodes (3, 4) into a desired position when the screwing means are loosened, and can be clamped to the electrodes (3, 4) in this position by tightening the screwing means (56).

5. Device according to one of the claims 3 or 4,
**characterised in that**
each of the clamping jaws (15, 16) has two trough-shaped take-ups (18, 19, 20, 21), which encompass the respective electrode (3, 4) for guiding the clamping jaws (15, 16) when the slide (14) is displaced.

6. Device according to one of the preceding claims,
**characterized in that**
the depth stop (10) comprises at at least one limiting means (12, 13) extending parallel to the electrodes (3, 4) which is movable together with the depth strop relative to the electrodes (3, 4).

7. Device according to claim 6 and one of the claims a to 5,
**characterised in that**
the limiting means comprises at least two pins (12, 13) which are received in parallel and at a distance from each other at at least one of the two clamping jaws (15, 16) in such a way that the surfaces (58, 59) at the free ends of the pins (12, 13) are positioned in an imagined plane which extends substantially parallel to a cross ridge (54) of a wire clip (50) received by the electrodes (3, 4).

8. Device according to claim 6 and one of the claims 3 to 5,
**characterised in that**
the limiting means (12, 13) comprises an in particular cube-shaped protection (54), which is received by one of the two clamping jaws (15, 16).

9. Device according to one of the preceding claims,
**characterised in that**
a scale (23) is arranged at the housing (31) or at one of the electrodes (3, 4), on which the path of travel along which the stop (10) is moved relative to the electrodes (3, 4) can be read.

10. Device according to one of the preceding claims,
**characterised in that**
the scale (23) comprises position markers, which are preferably provided as annular grooves at regular distances, in particular of 1 mm, on the outside of an electrode (4), and **in that** a spring-loaded arresting lug is provided, which slides along the outside of the electrode (4) and engages the annular grooves whilst generating a noticeable mechanical resistance and/or an acoustic noise.

## Revendications

1. Dispositif (1) permettant d'introduire une agrafe métallique (50) conductrice d'électricité dans une pièce en matière synthétique thermoplastique, comprenant un boîtier (31) et, prévues sur celui-ci, une première et une seconde électrode (3, 4) sur laquelle une branche respective (51, 52) de l'agrafe métallique (50) peut être recueillie pour produire une flux de courant chauffant l'agrafe métallique (50) de manière à enfoncer celle-ci dans la pièce par fluidification de !a matière synthétique thermoplastique en faisant avancer le boîtier (31).
**caractérisé en ce que**
le boîtier (31) possède au niveau des électrodes (3, 4) une butée de profondeur (10) réglable dans la direction d'avance.

2. Dispositif selon l'une des revendications précédentes.
**caractérisé en ce que**
la butée de profondeur (10) est logée sur les électrodes (3, 4) et est constituée d'une matière non conductrice d'électricité, notamment de matière synthétique.

3. Dispositif selon la revendication 2,
**caractérisé en ce que**
les électrodes (3, 4) sont notamment en forme de cylindres ou de barres et **en ce que** la butée de profondeur (10) comprend deux mors de serrage (15, 16) formant une coulisseau (14) et venant en prise autour des électrodes (3, 4).

4. Dispositif selon la revendication 3,
**caractérisé en ce que**
les mors de serrage (15, 16) peuvent être rapprochés l'un de l'autre par des moyens à vis (56), de telle sorte que lorsque les moyens à vis sont desserrés, les mors de serrage (15, 16) peuvent glisser le long des électrodes (3, 4) dans une position voulue et être bloqués sur les électrodes (3, 4) dans cette position en serrant les moyens à vis (56).

5. Dispositif selon l'une des revendications 3 ou 4,
**caractérisé en ce que**
chacun des mors de serrage (15, 16) comporte deux logements (18, 19, 20, 21) qui viennent en prise autour de l'électrode respective (3, 4) à la manière de demi-coquilles pour guider les mors de serrage (15, 16) lors du déplacement du coulisseau (14).

6. Dispositif selon l'une des revendications précédentes,
**caractérisé en ce que**
la butée de profondeur (10) comprend au moins un moyen de limitation (12, 13) s'étendant parallèlement aux électrodes (3, 4) et qui est déplaçable par rapport aux électrodes (3, 4) conjointement avec la butée de profondeur.

7. Dispositif selon la revendication 6 et l'une des revendications 3 à 5,
**caractérisé en ce que**
le moyen de limitation comprend au moins deux tiges (12, 13) qui sont logées parallèlement l'une à l'autre et à distance l'une de l'autre sur au moins un des deux mors de serrage (15, 16) de telle manière que les faces d'arrêt (58, 59) aux extrémités libres des tiges (12, 13) se trouvent dans une plan imaginaire qui s'étend sensiblement parallèlement à une branche transversale (54) d'une agrafe métallique (50) recueillie sur les électrodes (3, 4).

8. Dispositif selon la revendication 6 et l'une des revendications 3 à 5,
**caractérisé en ce que**
le moyen de limitation (12, 13) comprend une saillie (54) notamment de forme parallélépipédique, qui est recueillie sur un des deux mors de serrage (15, 16).

9. Dispositif selon l'une des revendications précédentes,
**caractérisé en ce que**
une règle graduée (23) est fixée au boîtier (31) ou à une des électrodes (3, 4), permettant de lire la course de déplacement de la butée (10) par rapport aux électrodes (3, 4).

10. Dispositif selon l'une des revendications précédentes,
**caractérisé en ce que**
la règle graduée (23) comprend des marques de position ménagées, de préférence sous forme de rainures annulaires, à des distances régulières notamment de 1 mm dans la face extérieure d'une électrode (4), et **en ce qu'**il est prévu un cliquet d'arrêt sollicité par ressort, qui glisse sur la face extérieure de l'électrode (4) et s'engage dans les rainures annulaires en créant une résistante mécanique perceptible et/ou une bruit sonore.
